# EUROPEAN PATENT SPECIFICATION

(11) **EP 3 851 990 B1**
(45) Date of publication and mention of the grant of the patent: **03.07.2024**
(21) Application number: 20208255.8
(22) Date of filing: 18.11.2020
(51) Int. Cl.: G06F 21/60

(54) **USER MANAGEMENT SYSTEM OF ELECTRICAL DEVICE**
BENUTZERVERWALTUNGSSYSTEM EINER ELEKTRISCHEN VORRICHTUNG
SYSTÈME DE GESTION D'UTILISATEUR D'UN DISPOSITIF ÉLECTRIQUE

(30) Priority: 20.01.2020 JP 2020006916
(43) Date of publication of application: 21.07.2021
(73) Proprietor: Panasonic Intellectual Property Management Co., Ltd., Osaka-shi, Osaka 540-6207 (JP)
(72) Inventor: UCHITANI, Kazuo, Osaka, 540-6207 (JP); NAGAO, Tomohiro, Osaka, 540-6207 (JP); ISHINABE, Kazuya, Osaka, 640-6207 (JP)
(74) Representative: Eisenführ Speiser

(56) References cited:
- US-A1- 2019 170 396
- US-A1- 2020 021 457
- Apple: "Share control of your home - Apple Support", , 16 December 2019 (2019-12-16), pages 1-4, XP055798975, Retrieved from the Internet: URL:https://web.archive.org/web/2019121610 0228/https://support.apple.com/en-us/HT208 709 [retrieved on 2021-04-26]

## Description

### [TECHNICAL FIELD]

This disclosure relates to a user management system of an electrical device.

### [BACKGROUND TECHNIQUE]

Patent document 1 discloses a technique in which only a person who carried out user registration can operate a control medium device from an operation terminal device, a person who first carries out this user registration is recognized as an "administrator", and authority capable of "checking" and "deleting" other users is given only to the "administrator".

### [PRIOR ART DOCUMENT]

Technological background for the disclosed solution can also be found in
"Apple: "Share control of your home - Apple Support"" 16 December 2019 (2019-12-16), pages 1-4, XP055798975,Retrieved from the Internet;URL:https:web.archive.org/ web/20191216100228/https://support.apple.com/en-us/HT208709 [retrieved on 2021-04-26]
or US 2019/170396 or US 2020/021457

[Patent Document 1] Japanese Patent Application Laid-open No.2014-211833

### [SUMMARY OF THE INVENTION]

The invention is set out in the appended set of claims.

### [PROBLEM TO BE SOLVED BY THE INVENTION]

This disclosure provides a management system in which application software is actuated and operation authority of an electrical device is given to an appropriate user.

### [MEANS FOR SOLVING THE PROBLEM]

According to a user management system of an electrical device of this disclosure, application software is actuated by an operation terminal, and a user obtains operation authority of the electrical device, and a user who first carries out user registration determines whether operation authority is acquired by other user.

### [EFFECT OF THE INVENTION]

According to this disclosure, it is possible to provide a management system in which application software is actuated by an operation terminal, and operation authority of an electrical device is given to an appropriate user.

### [BRIEF DESCRIPTION OF THE DRAWINGS]

Fig. 1 is a block diagram of a heat pump hot water supply system which is an electrical device according to an embodiment of this disclosure;
Fig. 2 is a schematic diagram of a user management system of the heat pump hot water supply system which is the electrical device; and
Fig. 3 is a diagram showing a relation between a user and authority of the user.

### [MODE FOR CARRYING OUT THE INVENTION]

An embodiment will be described in detail below with reference to the drawings. Too much detailed description is omitted in some cases. For example, detailed description of already known facts, and redundant description of substantially the same configuration are omitted in some cases. This is for avoiding the following description from becoming redundant, and for making it easy for a person skilled in the art to understand.

The accompanying drawings and the following description are provided so that a person skilled in the art sufficiently understands this disclosure, and this provision is not intended to limit the subject matter described in claims.

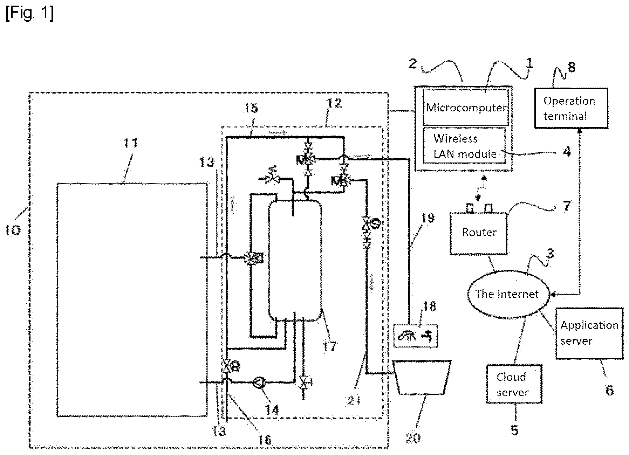

An embodiment of this disclosure will be described below using Figs. 1 to 3.

### [1-1. Action and function of electrical device]

Fig. 1 is a block diagram of an electrical device according to an embodiment. In the embodiment of the disclosure, a heat pump hot water supply system is one example of the electrical device.

Action and function of the heat pump hot water supply system which is the electrical device will be described first using Fig. 1.

A heat pump heat source device 11 heats tap water by water-refrigerant heat exchange. A tank unit 12 stores high temperature water heated by the heat pump heat source device 11 and conveyed through a pipe 13. The tank unit 12 mixes the stored hot water and tap water, and supplies hot water having predetermined temperature.

The heat pump heat source device 11 and the tank unit 12 compose a heat pump hot water supply system 10.

A hot water supply cycle 15 configured in the tank unit 12 includes a hot water tank 17 for storing, therein, high temperature water heated by high temperature and high pressure refrigerant and produced in the heat pump heat source device 11, a water-entering pipe 16 for sending tap water into the hot water tank 17, a hot water supply pipe 19 for supplying high temperature water from the hot water tank 17 to a hot water supply terminal 18 of a faucet or a shower, a bath hot water supply pipe 21 for supplying predetermined temperature hot water to a bathtub 20, and a circulation pump 14 for conveying low temperature water in the hot water tank 17 to the heat pump heat source device 11 to heat low temperature water in the hot water tank 17 and to produce high temperature water.

A heat pump cycle is placed in the heat pump heat source device 11. The heat pump cycle is composed of a compressor (not shown) which compresses refrigerant and produces high temperature and high pressure refrigerant.

Operation of the above-described heat pump hot water supply system 10 is controlled by a bath remote controller (not shown) and a kitchen remote controller 2.

A microcomputer 1 and a wireless LAN module 4 are placed in the kitchen remote controller 2. The wireless LAN module 4 communicates with a wireless LAN router 7 which is placed in a living room or the like, and the wireless LAN module 4 is connected to a cloud server 5 through the Internet 3.

An operation terminal 8 such as a smartphone accesses to the cloud server 5 through the Internet 3, a user operates the operation terminal 8 through the Internet 3, the wireless LAN router 7 and the wireless LAN module 4, and the user checks a remaining hot water amount in the hot water tank 17 and instructs to prepare a bath. According to this, it is possible to operate the heat pump heat source device 11, carry out hot water filling operation of the bathtub 20, and check operation information of the heat pump hot water supply system 10.

As described above, the user operates the operation terminal 8 which is a mobile terminal such as a smartphone, and checks the operation information of the heat pump hot water supply system 10 and failure history. According to this, it is possible to make a remote diagnosis of a failure portion, and swiftly repair the failure portion.

Here, a user operates the operation terminal 8 which is a mobile terminal such as a smartphone, and can operate a device, drive a device, and check operation information of the device. This fact is also the same in an air conditioner.

### [1-2. User management system of electrical device]

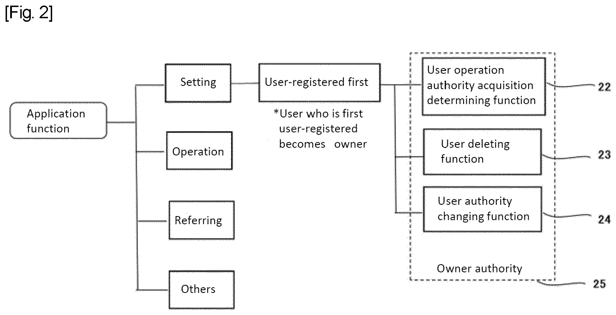

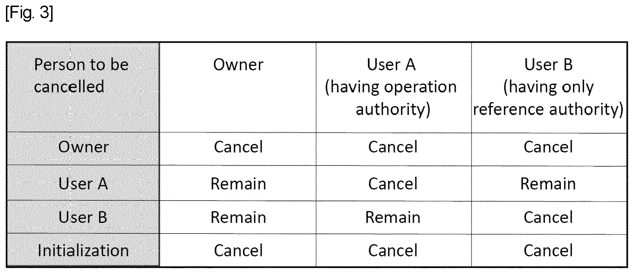

Fig. 2 is a schematic diagram of the user management system of the electrical device in the embodiment. Fig. 3 is a diagram showing a relation between a user and authority of the user in the embodiment.

The user management system of the electrical device will first be described using Fig. 2.

In Figs. 1 and 2, after downloading and installing application software stored in an application server 6, a user who first sets predetermined items using the operation terminal 8 which is the mobile terminal such as a smartphone, and registers as a user first acquires operation authority of the electrical device.

A user who first carries out user registration and acquires operation authority of the electrical device also acquires authority as an owner.

Then, other user requests the owner to approve user registration and acquisition of the operation authority of the electrical device. If predetermined items are set by the operation terminal 8, communication means informs this fact to an owner's operation terminal 8.

At that time, if approval of the owner who first acquires the operation authority of the electrical device is not obtained, other user cannot acquire the operation authority of the electrical device.

That is, if the owner who first acquires the operation authority of the electrical device accepts other user's approval request of acquisition of the operation authority of the electrical device, the other user can carry out the user registration, and can acquire the operation authority of the electrical device. The owner can also deny the other user's approval request of acquisition of the operation authority.

Further, even if the owner denies other user's approval request of acquisition of the operation authority, the owner approves the other user to acquire reference authority of the electrical device, and the other user can register as a user. The above-described function is a user operation authority acquisition determining function 22.

Here, the operation authority is authority for allowing a user to connect with the cloud server 5 through the Internet 3 using the operation terminal 8, to actuate the application software to operate the electrical device, and to set control specification.

On the other hand, reference authority is authority for not allowing a user to operate the electrical device, but for allowing the user to refer to an operation manual and the like of the electrical device using the operation terminal 8.

Next, a relation between a user and authority of the user will be described using Fig. 3.

The owner can execute cancelation (delete) of operation authority of other user who already acquires the operation authority. That is, the owner can execute cancelation (delete) of operation authority and reference authority of other user. The above-described function is a user deleting function 23.

Further, the owner can change reference authority of other user who already acquires the operation authority to operation authority. The above-described function is a user authority changing function 24.

The user operation authority acquisition determining function 22, the user deleting function 23 and the user authority changing function 24 are owner authority 25 which is given only to the owner.

At that time, even if the operation authority or the reference authority of the other user is cancelled (deleted), information that the operation authority or the reference authority is cancelled (deleted) is not given to the other user whose operation authority or reference authority is cancelled.

In the case of the initialization of the user registration, this information is not given to the deleted user.

The electrical device is the heat pump hot water supply system 10. At least one of setting of hot water supply temperature which is sent from the hot water supply terminal 18 of a faucet of a shower through the hot water supply pipe 19, and setting of bath temperature which is predetermined temperature of hot water which is kept warm in the bathtub 20 is not included in the operation authority.

### [1-3. Effect]

As described above, in the user management system of an electrical device of the embodiment in which application software is actuated by the operation terminal and a user obtains the operation authority of the electrical device, a user who first registered as a user determines whether the operation authority is given to the other user. Therefore, it is possible to prevent the user's child from obtaining the operation authority, from downloading and installing the application software, and from setting the control specification of the electrical device without permission from an administrator of a parent or the like.

Therefore, approval request of acquisition of the operation authority of a user such as a child who does not understand the control specification of the electrical device can be denied, and it is possible to provide a management system capable of actuating the application software by the operation terminal and capable of giving the operation authority of the electrical device to an appropriate user.

Further, only a user who is first user-registered can execute the cancellation of the operation authority of the other user who already acquires the operation authority. Therefore, it is possible to strengthen the management structure of a user who acquires the operation authority.

Further, even if a user who is first user-registered executes the cancellation of the operation authority of the other user who already acquires the operation authority, the other user is not informed of the fact that his or her operation authority is cancelled. Hence, even when execution of cancelation of the operation authority of the other user who already acquires the operation authority is failed for some reason, since the fact that the operation authority is cancelled is not informed to the other user, an inconsistency is not generated between the information content and its result.

Even if a user who is first user-registered denies approval request of acquisition of operation authority of the other user, approval of acquisition of reference authority capable of referring to the operation manual and the like can be given to the other user. Therefore, it is possible to provide a user management system of an electrical device having excellent usability while strengthening the management structure.

A user who is first user-registered can change authority of the other user who already acquires the authority. Therefore, it is possible to provide a user management system of an electrical device having excellent usability while strengthening the management structure.

The electrical device is an air conditioner or a heat pump hot water supply system having a function to compress refrigerant to high temperature and high pressure by a compressor and to heat air or water by refrigerant. The electrical device can be connected to a cloud server through the Internet.

According to this, the application software can be actuated by the operation terminal 8 and the operation authority can be given to an appropriate user. Therefore, it is possible to provide an air conditioner or a heat pump hot water supply system having excellent usability.

The electrical device is the heat pump hot water supply system 10. At least one of the setting of hot water supply temperature and the setting of bath temperature is not included in the operation authority. Therefore, it is possible to provide a heat pump hot water supply system realizing stable usability.

### [INDUSTRIAL APPLICABILITY]

As described above, according to the user management system of an electrical device of this disclosure, it is possible to provide a management system in which application software is actuated by an operation terminal, and operation authority of the electrical device is given to an appropriate user. Therefore, the user management system can be applied to an electrical device which can be connected to a cloud server through the Internet.

### [EXPLANATION OF SYMBOLS]

- 1: microcomputer
- 2: kitchen remote controller
- 3: the Internet
- 4: wireless LAN module
- 5: cloud server
- 6: application server
- 7: wireless LAN router
- 8: operation terminal
- 10: heat pump hot water supply system (electrical device)
- 11: heat pump heat source device
- 12: tank unit
- 13: pipe
- 14: circulation pump
- 15: hot water supply cycle
- 16: water-entering pipe
- 17: hot water tank
- 18: hot water supply terminal
- 19: hot water supply pipe
- 20: bathtub
- 21: bath hot water supply pipe
- 22: user operation authority acquisition determining function
- 23: user deleting function
- 24: user authority changing function
- 25: owner authority

## Claims

1. A user management system of a heat pump hot water supply system (10) as an electrical device, wherein
a heat pump heat source device (11) and a tank unit (12) compose the heat pump hot water supply system (10);
the tank unit (12) includes a hot water tank (17) for storing, therein, high temperature water heated by high temperature and high pressure refrigerant and produced in the heat pump heat source device (11);
a water-entering pipe (16) for sending tap water into the hot water tank (17);
a hot water supply pipe (19) for supplying high temperature water from the hot water tank (17) to a hot water supply terminal (18) of a faucet or a shower;
a bath hot water supply pipe (21) for supplying predetermined temperature hot water to a bathtub (20);
and a circulation pump (14) for conveying low temperature water in the hot water tank (17) to the heat pump heat source device (11);
a microcomputer (1) and a wireless LAN module (4) are placed in a remote controller (2) which controls operation of the above-described heat pump hot water supply system (10);
in which application software is actuated by an operation terminal (8), through an Internet (3) and the wireless LAN module (4), for controlling an operation of the heat pump heat source device (11) and carrying out of the hot water filling operation of the bathtub (20);
and checking a remaining hot water amount in the hot water tank (17), and checking an operation information of the heat pump hot water supply system (10), and checking failure history of the pump hot water supply system (10) and the like of which reference can be approved;
wherein
a user who is first user-registered acquires an owner authority (25) with reference to the heat pump hot water supply system (10) via actuating the application software by using the operation terminal (8);
the owner authority (25) involves a user operation authority acquisition determining function (22), a user deleting function (23) and a user authority changing function (24);
in the user operation authority acquisition determining function (22),
another user approves or denies an operation authority to carry out the operation of the heat pump hot water supply system (10);
the other user can approve a reference authority which carries out only the reference of the heat pump hot water supply system (10);
in the user deleting function (23), the owner can execute cancelation (delete) of the operation authority or the reference authority of other user who already acquires the operation authority;
in the user authority changing function (24), the owner can change the operation authority of other user to reference authority or can change reference authority of other user to operation authority;
the other user cannot acquire the operation authority without approval of the user who has acquired the owner authority (25).

2. The user management system of a heat pump hot water supply system (10) as the electrical device according to claim 1, wherein even if the user who is first user-registered executes cancellation of the operation authority of the other user who already acquires the operation authority, a fact that the operation authority is cancelled is not informed to the other user.

3. The user management system of a heat pump hot water supply system (10) as the electrical device according to claim 1, wherein at least one of setting of hot water supply temperature and setting of bath temperature is not included in the operation authority.

## Patentansprüche

1. Benutzerverwaltungssystem eines Wärmepumpen-Warmwasserversorgungssystems (10) als ein elektrisches Gerät, wobei
das Wärmepumpen-Warmwasserversorgungssystem (10) eine Wärmepumpen-Wärmequelleneinrichtung (11) und eine Tankeinheit (12) aufweist;
die Tankeinheit (12) einen Warmwassertank (17) zum Speichern von durch Hochtemperatur- und Hochdruckkältemittel geheiztem und in der Wärmepumpen-Wärmequellenvorrichtung (11) bereitgestelltem Hochtemperaturwasser enthält;
eine Wasserleitung (16) zum Einleiten von Leitungswasser in den Warmwassertank (17);
eine Warmwasserleitung (19) zum Zuführen von Hochtemperaturwasser aus dem Warmwassertank (17) zu einem Warmwasseranschluss (18) eines Wasserhahns oder einer Dusche;
eine Badewannen-Warmwasserleitung (21) zum Zuführen von Warmwasser mit vorbestimmter Temperatur zu einer Badewanne (20);
und eine Umwälzpumpe (14) zum Fördern von Wasser mit niedriger Temperatur in dem Warmwassertank (17) zu der Wärmepumpen-Wärmequellenvorrichtung (11);
ein Mikrocomputer (1) und ein drahtloses LAN-Modul (4) in einer Fernsteuerung (2), die den Betrieb des oben beschriebenen Wärmepumpen-Warmwasserversorgungssystems (10) steuert, eingebaut sind;
in der eine Anwendungssoftware durch ein Bedienterminal (8) über Internet (3) und das drahtlose LAN-Modul (4) angesteuert wird, um einen Betrieb der Wärmepumpen-Wärmequelleneinrichtung (11) und die Durchführung des Warmwasserfüllvorgangs der Badewanne (20) durchzuführen;
und Prüfen einer verbleibenden Warmwassermenge in dem Warmwassertank (17) und Prüfen einer Betriebsinformation des Wärmepumpen-Warmwasserversorgungssystems (10) und Prüfen einer Fehlerhistorie des Wärmepumpen-Warmwasserversorgungssystems (10) und dergleichen, deren Bezug genehmigt werden kann;
wobei
ein Benutzer, der zuerst als Benutzer registriert ist, eine Eigentümerberechtigung (25) in Bezug auf das Wärmepumpen-Warmwasserversorgungssystem (10) durch Betätigung der Anwendungssoftware unter Verwendung des Bedienterminals (8) erwirbt;
die Eigentümerberechtigung (25) eine Funktion zum Bestimmen des Erwerbs der Benutzerbetriebsberechtigung (22), eine Funktion zum Löschen des Benutzers (23) und eine Funktion zum Ändern der Benutzerberechtigung (24) umfasst;
in der Funktion zum Bestimmen des Erwerbs der Benutzerbetriebsberechtigung (22), ein anderer Benutzer eine Betriebsberechtigung zur Durchführung des Betriebs des Wärmepumpen-Warmwasserversorgungssystems (10) genehmigt oder verweigert; der andere Benutzer kann eine Bezugsberechtigung genehmigen, die nur den Bezug des Wärmepumpen-Warmwasserversorgungssystems (10) durchführt;
in der Funktion zum Löschen des Benutzers (23) kann der Eigentümer die Löschung (delete) der Betriebsberechtigung oder der Referenzberechtigung eines anderen Benutzers, der bereits die Betriebsberechtigung erworben hat, durchführen;
in der Funktion zum Ändern der Benutzerberechtigung (24) kann der Eigentümer die Betriebsberechtigung eines anderen Benutzers in eine Referenzberechtigung oder die Referenzberechtigung eines anderen Benutzers in eine Betriebsberechtigung ändern; der andere Benutzer kann die Betriebsberechtigung nicht ohne Zustimmung des Benutzers erwerben, der die Eigentümerberechtigung erworben hat (25).

2. Benutzerverwaltungssystem eines Wärmepumpen-Warmwasserversorgungssystems (10) als das elektrische Gerät nach Anspruch 1, wobei auch dann, wenn der zuerst angemeldete Benutzer die Löschung der Betriebsberechtigung des anderen Benutzers, der die Betriebsberechtigung bereits erworben hat, vornimmt, dem anderen Benutzer nicht mitgeteilt wird, dass die Betriebsberechtigung gelöscht ist.

3. Benutzerverwaltungssystem eines Wärmepumpen-Warmwasserversorgungssystems (10) als das elektrische Gerät nach Anspruch 1, wobei mindestens eine der Einstellungen Warmwasserversorgungstemperatur und Badtemperatur nicht in der Bedienberechtigung enthalten ist.

## Revendications

1. Système de gestion d'utilisateurs d'un système (10) d'alimentation en eau chaude de pompe à chaleur en tant que dispositif électrique,
un dispositif (11) de source de chaleur de pompe à chaleur et une unité de réservoir (12) composant le système (10) d'alimentation en eau chaude de pompe à chaleur ;
l'unité de réservoir (12) comprenant un réservoir (17) à eau chaude destiné à stocker, en son sein, de l'eau à haute température chauffée par un fluide frigorigène à haute température et à haute pression et produite dans le dispositif (11) de source de chaleur de pompe à chaleur ;
un tuyau (16) d'entrée d'eau destiné à envoyer de l'eau du robinet dans le réservoir (17) à eau chaude ;
un tuyau (19) d'alimentation en eau chaude destiné à fournir de l'eau à haute température provenant du réservoir (17) à eau chaude à un terminal (18) d'alimentation en eau chaude d'un robinet ou d'une douche ;
un tuyau (21) d'alimentation en eau chaude de bain destiné à fournir de l'eau chaude à une température prédéterminée à une baignoire (20) ;
et une pompe de circulation (14) destinée à transporter de l'eau à basse température dans le réservoir (17) à eau chaude vers le dispositif (11) de source de chaleur de pompe à chaleur ;
un micro-ordinateur (1) et un module LAN sans fil (4) étant placés dans un dispositif de commande à distance (2) qui commande l'actionnement du système (10) d'alimentation en eau chaude de pompe à chaleur décrit ci-dessus ;
dans lequel un logiciel d'application est actionné par un terminal d'actionnement (8), par l'intermédiaire d'Internet (3) et du module LAN sans fil (4) afin de commander un actionnement du dispositif (11) de source de chaleur de pompe à chaleur et d'effectuer l'actionnement de remplissage d'eau chaude de la baignoire (20) ;
et de vérifier une quantité d'eau chaude restante dans le réservoir (17) à eau chaude et de vérifier des informations d'actionnement du système (10) d'alimentation en eau chaude de pompe à chaleur et de vérifier l'historique de défaillance du système (10) d'alimentation en eau chaude de pompe et similaire dont la référence peut être approuvée ;
dans lequel
un utilisateur qui est le premier utilisateur enregistré acquiert une autorité de propriétaire (25) avec une référence au système (10) d'alimentation en eau chaude de pompe à chaleur par actionnement du logiciel d'application à l'aide du terminal d'actionnement (8) ;
l'autorité de propriétaire (25) implique une fonction (22) de détermination d'acquisition d'autorité d'actionnement d'utilisateur, une fonction (23) de suppression d'utilisateur et une fonction (24) de modification d'autorité d'utilisateur ;
dans la fonction (22) de détermination d'acquisition d'autorité d'actionnement d'utilisateur,
un autre utilisateur approuve ou refuse une autorité d'actionnement pour effectuer l'actionnement du système (10) d'alimentation en eau chaude de pompe à chaleur ;
l'autre utilisateur peut approuver une autorité de référence qui n'effectue que la référence du système (10) d'alimentation en eau chaude de pompe à chaleur ;
dans la fonction (23) de suppression d'utilisateur, le propriétaire peut exécuter une annulation (suppression) de l'autorité d'actionnement ou de l'autorité de référence d'un autre utilisateur qui acquiert déjà l'autorité d'actionnement ;
dans la fonction (24) de modification d'autorité d'utilisateur, le propriétaire peut modifier l'autorité d'actionnement d'un autre utilisateur en autorité de référence ou peut modifier l'autorité de référence d'un autre utilisateur en autorité d'actionnement ;
l'autre utilisateur ne peut pas acquérir l'autorité d'actionnement sans approbation de l'utilisateur qui a acquis l'autorité de propriétaire (25).

2. Système de gestion d'utilisateurs d'un système (10) d'alimentation en eau chaude de pompe à chaleur en tant que dispositif électrique selon la revendication 1, dans lequel, même si l'utilisateur qui est le premier utilisateur enregistré exécute une annulation de l'autorité d'actionnement de l'autre utilisateur qui acquiert déjà l'autorité d'actionnement, le fait que l'autorité d'actionnement est annulée n'est pas indiqué à l'autre utilisateur.

3. Système de gestion d'utilisateurs d'un système (10) d'alimentation en eau chaude de pompe à chaleur en tant que dispositif électrique selon la revendication 1, au moins un élément parmi le réglage de la température d'alimentation en eau chaude et le réglage de la température de bain n'étant pas inclus dans l'autorité d'actionnement.
